# FASCICULE DE BREVET EUROPEEN

(11) **EP 1 900 886 B1**
(45) Date de publication et mention de la délivrance du brevet: **14.10.2009**
(21) Numéro de dépôt: 07291030.0
(22) Date de dépôt: 22.08.2007
(51) Int. Cl.: E04B 1/88, F16L 59/02, E04B 1/74

(54) **Isolant multicouche pour l'isolation thermique et phonique**
Mehrschichtiges Dämmstoffelement zur Wärme und Schalldämmung
Insulating element consisting of several layers for heat and sound proofing

(30) Priorité: 18.09.2006 FR 0608148
(43) Date de publication de la demande: 19.03.2008
(73) Titulaire: KdB Isolation, 44300 Nantes (FR)
(72) Inventeur: Delcroix, Guy, 75017 Paris (FR)
(74) Mandataire: Laget, Jean-Loup

(56) Documents cités:
- EP-A2- 0 867 572
- WO-A-01/00941
- DE-A1- 10 261 087

## Description

La présente invention concerne un isolant multicouche pour l'isolation thermique et phonique de construction, ledit isolant se présentant sous forme d'une bande découpée transversalement en tronçons lors de la pose.

Des isolants polyfonctionnels pour la réalisation de barrière thermique réfléchissante sont aujourd'hui largement utilisés dans l'isolation de bâtiment. Chaque isolant se présente sous la forme de feuilles superposées de matériau variable, les feuilles constitutives des faces externes dudit isolant étant réfléchissantes, c'est-à-dire présentant une émissivité inférieure à 0,7. La fabrication de ces isolants est souvent réalisée à partir de feuilles disposées en rouleaux. Ces rouleaux sont déroulés simultanément et les feuilles sont ainsi assemblées par soudage, couture, collage ou tout autre procédé d'assemblage permettant de les maintenir superposées. De ce fait, chaque isolant se présente à l'état fini sous la forme d'une laize de largeur pouvant varier entre 0,5 et 2 mètres et de longueur pouvant atteindre plusieurs mètres, l'épaisseur étant généralement comprise entre 8 et 50 mm. Du fait de la grande longueur de la bande constitutive de la laize, généralement livrée en rouleau, il est nécessaire de la découper avant pose. Cette découpe nécessite soit de positionner le rouleau à sa place définitive pour procéder à une coupe sur place, soit de prendre les dimensions de la laize à poser et de la découper en un endroit adapté avant de la poser. Dans les deux cas, l'opérateur doit disposer d'un outil de mesure, tel qu'un mètre enrouleur et procéder à un marquage de la bande avant découpe. Ces opérations de prise de mesure et de marquage sont fastidieuses et source de perte de temps.

Le document EP 0867 572 décrit un isolant se présentant sous forme d'un produit en laine minérale formée d'une natte en laine minérale et d'un contre collage en forme de feuille en matière synthétique, en métal, en mat de fibres de verre ou en papier annexe. Ce produit se caractérise par le fait que le contre collage présente une marque configurée par des signes en forme de nombres, lettres ou pictogrammes qui contiennent un sens. A aucun moment, la notion d'échelle de mesure n'est précisée. Le document DE 1 026 1087 décrit quant à lui un isolant monocouche.

Un but de la présente invention est donc de proposer un isolant multicouche dont la conception rend inutile l'utilisation d'outil de mesure, tel qu'un mètre enrouleur, et permet de s'exempter de toute prise de mesure préalablement à la pose.

A cet effet, l'invention a pour objet un isolant multicouche selon la revendication 1.

L'intégration d'au moins une échelle de mesure à l'isolant permet à l'opérateur par lecture directe de repérer la dimension de bande qu'il souhaite obtenir avant de procéder à la découpe transversale de la bande en vue de l'obtention d'un tronçon de bande.

L'invention sera bien comprise à la lecture de la description suivante d'exemples de réalisation, en référence aux dessins annexés dans lesquels :
la figure 1 représente une vue en coupe transversale d'un isolant multicouche conforme à l'invention et
la figure 2 représente une vue de dessus d'une échelle de mesure destinée à être intégrée à l'isolant.

Comme mentionné ci-dessus, l'isolant 1 multicouche, objet de l'invention, se présente sous forme d'une bande qui, avant la pose sur une surface à isoler, est enroulée pour former un rouleau. L'axe longitudinal de la bande s'étend parallèlement à la direction du déroulement de la bande. Cet isolant 1 est généralement destiné à être assemblé à au moins un isolant similaire par recouvrement partiel desdits isolants entre eux. Le recouvrement partiel s'opère généralement au niveau des bords longitudinaux desdites bandes. Ces bandes peuvent ainsi être posées verticalement et juxtaposées partiellement ou être posées horizontalement et superposées partiellement. L'isolant comporte donc au moins une zone 6 de recouvrement, de préférence deux zones 6 de recouvrement sensiblement parallèles, positionnées chacune au voisinage d'un bord longitudinal libre de l'isolant. Il est également possible d'imaginer la pose d'un tel isolant par mise bord à bord avec un isolant similaire. Dans ce cas, l'isolant est exempt de zone 6 de recouvrement.

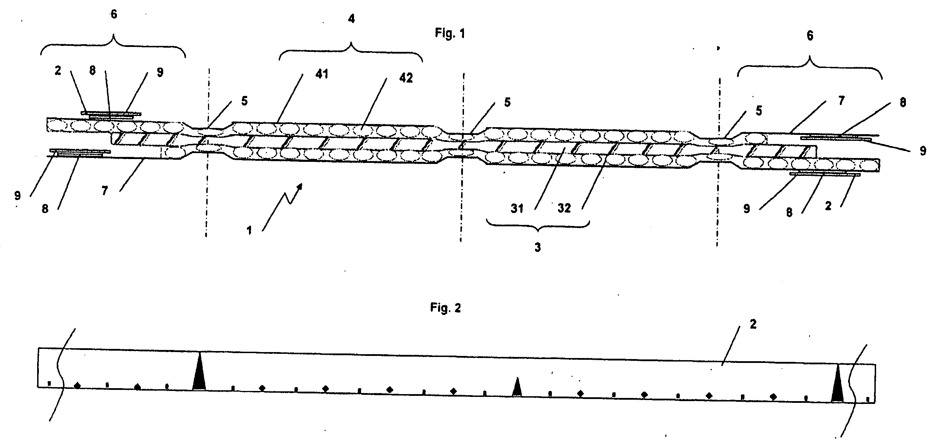

Préalablement et avant toute pose d'un tel isolant, il est nécessaire de procéder à la découpe transversale de la bande en un tronçon de bande correspondant à la longueur de la surface à revêtir et à isoler. A cet effet et de manière caractéristique à l'invention, la bande, constitutive de l'isolant, comporte une échelle 2 de mesure disposée parallèle à l'axe longitudinal de la bande. Cette échelle de mesure relie entre eux deux bords opposés transversaux de la bande de manière à repérer, par lecture directe, l'emplacement souhaité d'une ligne de coupe en fonction des caractéristiques dimensionnelles du tronçon de bande à obtenir. Du fait de sa disposition, l'échelle de mesure se découvre au fur et à mesure du déroulement de la bande. Une bande peut comporter plusieurs échelles de mesure généralement parallèles entre elles comme l'illustre la figure 1.

Indépendamment du mode de réalisation d'assemblage retenu, l'échelle 2 de mesure ou chaque échelle 2 de mesure est réalisée sous forme d'une bande 9 pelable, rapportée et solidarisée généralement par collage à l'isolant 1. En effet, généralement, l'isolant est formé d'une âme 3 recouverte, sur chacune de ses faces, d'un revêtement 4 thermiquement conducteur et réfléchissant, tel qu'un revêtement métallique ou métallisé. Les revêtements 4 et l'âme 3 sont réunis, à l'état superposé, par des moyens de liaison appropriés, tels que des lignes 5 de liaison longitudinales, en particulier de couture, de soudure ou de collage. Les revêtements 4 thermiquement conducteurs sont par exemple formés d'une couche métallique et sont en particulier à base d'aluminium. L'âme 3 de l'isolant peut être quant à elle constituée d'une ou plusieurs couches de matériau. Elle peut par exemple comporter au moins une couche 31 de mousse en matière synthétique, de préférence ignifugée interposée entre les faces internes de nappes 32 de film de matière synthétique à bulles. Ces films de matière synthétique à bulles peuvent être chacun soudés à chaud sur la face interne d'un revêtement 4 thermiquement conducteur et réfléchissant. Il est également possible d'imaginer une âme formée d'une pluralité de couches de nature quelconque, lesdites couches étant adhérées l'une à l'autre ou séparées l'une de l'autre par une lame d'air.

L'isolant 1 ainsi formé, de manière générale, de deux revêtements 4 réfléchissants et conducteurs entre lesquels est interposée une âme 3 isolante, est destiné à être assemblé à recouvrement le long d'au moins l'un de ses bords longitudinaux à un élément d'isolation similaire adjacent. Comme l'isolant 1 comporte deux bords longitudinaux parallèles, il comporte deux zones 6 de raccordement à recouvrement avec un isolant similaire adjacent.

La configuration des zones 6 de raccordement peut être diverse et variée.

Dans un exemple non représenté, au moins une des zones 6 de recouvrement de l'isolant avec un isolant similaire peut être exempte sur l'une de ses faces, en l'occurrence la face destinée à recouvrir l'autre isolant, du revêtement thermiquement conducteur de manière à exclure, lors de l'assemblage à recouvrement partiel desdits isolants, la formation de pont thermique dû à un contact métal/métal. Dans au moins l'une de ces zones de recouvrement, l'isolant est donc dépourvu, sur l'une de ses faces, au moins du revêtement thermiquement conducteur et éventuellement d'une partie ou de la totalité de l'âme pour ne laisser subsister, dans ce second cas, que le revêtement thermiquement conducteur de l'autre face. L'isolant peut, de manière équivalente, ne pas comporter dans sa zone de recouvrement avec un isolant similaire adjacent de zone exempte de revêtement thermiquement conducteur, l'isolant étant alors réalisé de manière identique sur toute la largeur dudit isolant. Il est également possible de ménager dans la tranche de l'isolant une gorge longitudinale obtenue par une largeur inférieure de l'âme sur au moins une partie de son épaisseur en vue d'un assemblage à recouvrement partiel à emboîtement de l'isolant avec un isolant similaire adjacent. Ce mode de réalisation de la zone 6 est représenté à la figure 1.

Indépendamment du mode de réalisation retenu pour la zone de recouvrement, cet isolant comporte généralement dans sa zone de recouvrement avec un isolant adjacent une bande 9 pelable s'étendant sensiblement parallèlement à l'axe longitudinal de la bande constitutive de l'isolant et reliant deux bords transversaux de ladite bande entre eux. Cette bande 9 pelable est constituée d'un matériau siliconé pelable adhéré par collage par une couche 8 d'adhésif ou par une bande adhésive double face ou non à l'isolant lors de la fabrication de l'isolant. Au moment de la pose et de l'assemblage des isolants entre eux, la bande 9 pelable est enlevée et l'adhésif 8 demeuré sur l'isolant est utilisé pour la fixation de l'isolant à un isolant adjacent ou à la surface à isoler. Ainsi, dans un mode de réalisation particulier de l'invention, l'échelle 2 de mesure est formée par une bande 9 pelable rapportée sur au moins l'une des faces intérieure ou extérieure d'au moins l'un des revêtements électriquement thermiquement conducteurs et réfléchissants. Cette bande 9 pelable peut, de manière équivalente, être rapportée dans l'épaisseur de l'isolant, en particulier au niveau des flancs d'une gorge ménagée dans la tranche du bord longitudinal d'assemblage de l'isolant comme l'illustre la figure 1. Dans ce cas, l'échelle 2 de mesure est formée par une bande 9 pelable rapportée sur au moins l'une des faces d'au moins l'un des éléments constitutifs de l'âme 3. Ce mode de réalisation de l'échelle sous forme d'une bande pelable permet d'intégrer aisément l'échelle 2 de mesure à l'isolant car la bande est réalisée en un matériau imprimable et comporte une surface apparente sensiblement lisse sur laquelle est imprimée ladite échelle. Il doit cependant être noté que les marquages ou graduations peuvent être apposées sur la bande pelable par tout autre moyen que l'impression.

La bande généralement imprimée pelable peut une fois détachée de l'isolant être utilisée comme gabarit pour la découpe suivante et éviter ainsi tout risque d'erreur. Ainsi, l'utilisation d'une bande pelable pour la réalisation de l'échelle permet de conférer à ladite bande plusieurs rôles à savoir un rôle de protection de l'adhésif servant à l'assemblage entre deux isolants, un rôle d'échelle de mesure et un rôle de gabarit.

Dans un autre mode de réalisation non représenté, l'échelle 2 de mesure peut être réalisée par impression d'au moins l'une des faces de l'isolant 1. Dans ce cas, il est préférable que ladite face de l'isolant soit parfaitement plane pour éviter toute erreur au moment de l'impression.

De préférence, indépendamment du mode de réalisation retenu, l'échelle 2 de mesure est de préférence positionnée dans au moins une zone 6 de raccordement à recouvrement de l'isolant avec un isolant similaire adjacent, étant entendu que dans ce cas, l'isolant multicouche est un isolant du type destiné à être assemblé à au moins un isolant similaire à recouvrement partiel à emboîtement ou non.

L'échelle 2 de mesure est généralement du type métrique comme l'illustre la figure 2 et comporte une pluralité de graduations. Ces graduations peuvent s'étendre de centimètre en centimètre ou tous les 5 centimètres. Toute autre solution peut également convenir.

Grâce à la présence de cette échelle 2 de mesure, l'opérateur n'a plus besoin de disposer d'un outil de mesure de type mètre enrouleur avant pose pour mesurer la bande et repérer l'emplacement de découpe. En effet, dans le cas de l'isolant conforme à l'invention, il suffit à l'opérateur de dérouler la bande suivant une direction parallèle à l'axe longitudinal de la bande, de repérer sur l'échelle de mesure intégrée à la bande la dimension qui l'intéresse en fonction de la portion de bande à découper puis de procéder à la découpe transversale de la bande. Il en résulte une simplification des opérations de découpe d'un tel isolant.

## Revendications

1. Isolant (1) multicouche pour l'isolation thermique et phonique de construction, ledit isolant (1) se présentant sous forme d'une bande découpée en tronçons lors de la pose,
la bande comportant une échelle (2) de mesure disposée parallèle à l'axe longitudinal de la bande et reliant entre eux deux bords opposés transversaux de la bande de manière à repérer, par lecture directe, l'emplacement souhaité d'une ligne de coupe en fonction des caractéristiques dimensionnelles du tronçon de bande à obtenir,
**caractérisé en ce que** l'échelle (2) de mesure est réalisée sous forme d'une bande (9) pelable, rapportée et solidarisée généralement par collage à l'isolant (1).

2. Isolant (1) multicouche selon la revendication 1, du type destiné à être assemblé à au moins un isolant similaire par recouvrement partiel,
**caractérisé en ce que** l'échelle (2) de mesure est positionnée dans au moins une zone (6) de raccordement à recouvrement de l'isolant avec un isolant similaire-adjacent.

3. Isolant (1) multicouche selon l'une des revendications 1 et 2,
**caractérisé en ce que** l'échelle (2) de mesure est du type métrique.

4. Isolant (1) multicouche selon l'une des revendications 1 à 3,
**caractérisé en ce qu'**il est formé d'une âme (3) recouverte sur chacune de ses faces d'un revêtement (4) thermiquement conducteur et réfléchissant, tel qu'un revêtement métallique ou métallisé, lesdits revêtements (4) étant réunis, à l'état superposé, par des moyens de liaison appropriés, tels que des lignes (5) de liaison longitudinales, en particulier de couture, de soudure ou de collage.

5. Isolant (1) multicouches selon la revendication 4,
**caractérisé en ce que** les revêtements (4) thermiquement conducteurs sont à base d'aluminium tandis que l'âme (3) est formée de deux nappes (32) de film de matière synthétique à bulles entre lesquelles est interposée une couche (31) de mousse.

## Claims

1. Multiple-layer insulation (1) for thermal and sound insulation in construction, the said insulation (1) being in the form of a strip which is cut into sections when it is fitted,
the strip comprising a measuring scale (2) which is disposed parallel to the longitudinal axis of the strip, and connects to one another two opposite transverse edges of the strip, so as to locate, by means of direct reading, the required position of a cutting line, according to the dimensional characteristics of the section of strip to be obtained,
**characterised in that** the measuring scale (2) is produced in the form of a strip (9) which can be peeled off, and is added onto the insulation (1) and rendered integral with it generally by means of gluing.

2. Multiple-layer insulation (1) according to claim 1, of the type which is designed to be assembled to at least one similar piece of insulation by partial overlapping,
**characterised in that** the measuring scale (2) is positioned in at least one area (6) of overlapping connection of the insulation with a similar adjacent piece of insulation.

3. Multiple-layer insulation (1) according to one of claims 1 and 2,
**characterised in that** the measuring scale (2) is of the metric type.

4. Multiple-layer insulation (1) according to one of claims 1 to 3,
**characterised in that** it is formed by a core (3) which is covered on each of its faces by a reflective, thermally conductive covering (4), such as a metal or metallised covering, the said coverings (4) being joined, in the superimposed state, by appropriate connection means, such as longitudinal connection lines (5), which in particular are sewn, welded or glued.

5. Multiple-layer insulation (1) according to claim 4, **characterised in that** the thermally conductive coverings (4) are based on aluminium, whereas the core (3) is formed by two sheets (32) of bubble-type synthetic material film, between which a layer (31) of foam is interposed.

## Patentansprüche

1. Mehrlagiges Dämmelement (1) zur Wärme- und Schalldämmung, das beim Anbau als in Abschnitte getrennte Bahn vorliegt, wobei die Bahn eine Messskala (2) umfasst, die parallel zu der Längsachse der Bahn angeordnet ist und zwei gegenüberliegende Querkanten der Bahn miteinander verbindet, so dass in Abhängigkeit von den Maßen des zu erhaltenden Bahnabschnittes durch direktes Ablesen die gewünschte Stelle einer Trennlinie markiert werden kann, **dadurch gekennzeichnet, dass** die Messskala (2) als abziehbarer Streifen ausgeführt ist, der im Allgemeinen durch Aufkleben auf das Dämmelement (1) aufgebracht und damit verbunden wird.

2. Mehrlagiges Dämmelement (1) nach Anspruch 1, das dafür vorgesehen ist, mit mindestens einem gleichen Dämmelement einander teilweise überdeckend verbunden zu werden, **dadurch gekennzeichnet, dass** die Messskala (2) in mindestens einem Verbindungsbereich (6) angebracht ist, in dem das Dämmelement mit einem benachbarten gleichen Dämmelement teilweise überdeckend verbunden ist.

3. Mehrlagiges Dämmelement (1) nach einem der Ansprüche 1 und 2, **dadurch gekennzeichnet, dass** die Messskala (2) metrisch ist.

4. Mehrlagiges Dämmelement (1) nach einem der Ansprüche 1 bis 3, **dadurch gekennzeichnet, dass** es von einer Füllung (3) gebildet wird, die auf jeder ihrer Seiten mit einer wärmeleitfähigen und reflektierenden Beschichtung (4) wie einer Metallbeschichtung oder einer metallisierten Beschichtung belegt ist, wobei die Beschichtungen (4) im übereinandergelegten Zustand mit geeigneten Verbindungsmitteln wie Längsverbindungsnähten (5), insbesondere Näh-, Schweiß- oder Klebenähten, verbunden sind.

5. Mehrlagiges Dämmelement (1) nach Anspruch 4, **dadurch gekennzeichnet, dass** die wärmeleitfähigen Beschichtungen (4) aus Aluminium bestehen, während die Füllung (3) von zwei Lagen eines Luftpolsterkunststoffes gebildet wird, zwischen die eine Lage (31) eines Kunstschaumstoffs ein gelegt ist.
